# EUROPÄISCHE PATENTSCHRIFT

(11) **EP 2 669 543 B1**
(45) Veröffentlichungstag und Bekanntmachung des Hinweises auf die Patenterteilung: **06.12.2017**
(21) Anmeldenummer: 13169767.4
(22) Anmeldetag: 29.05.2013
(51) Int. Cl.: F16D 55/224, F16D 59/02, F16D 67/02, F16D 66/02, F16D 65/38, F16D 51/26, F16D 121/12, F16D 121/26, F16D 125/24, F16D 125/48, F16D 127/06, F16D 125/30

(54) **Vorrichtung zum Lüften und automatischen Betätigen einer Bremseinrichtung**
Device for the release and automatic actuation of a braking device
Dispositif de ventilation et d'actionnement automatique d'un système de frein

(30) Priorität: 30.05.2012 DE 102012104674
(43) Veröffentlichungstag der Anmeldung: 04.12.2013
(73) Patentinhaber: Tüschen & Zimmermann GmbH & Co. KG, 57368 Lennestadt-Saalhausen (DE)
(72) Erfinder: Tüschen, Ludger, 57368 Lennestadt (DE)
(74) Vertreter: Cohausz & Florack

(56) Entgegenhaltungen:
- DE-A1- 1 921 252
- DE-A1- 19 945 702
- DE-A1-102008 009 946
- DE-C- 710 060
- FR-A1- 2 956 888
- GB-A- 268 296
- GB-A- 363 137

## Beschreibung

Die Erfindung betrifft eine Vorrichtung zum Lüften und automatischen Betätigen einer Bremseinrichtung gemäß dem Oberbegriff des Anspruchs 1.

Bremseinrichtungen der hier in Rede stehenden Art dienen der sicheren Stillsetzung und dem Halten von Antriebssträngen, insbesondere von drehenden Maschinenteilen. Sie werden zum Beispiel an Kettenförderern oder Bandförderern eingesetzt, mit denen in Bergbau- und anderen Industriebetrieben stückiges Gut, wie Kohle, Gestein oder Erz, über lange Transportstrecken gefördert wird. Bei einer Störung der Antriebe oder bei einer gewollt eingeleiteten Betriebsunterbrechung stellen solche Bremseinrichtungen sicher, dass das Band oder die Förderkette mit dem darauf liegenden Fördergut zum Stillstand gebracht und gehalten wird, bis der Betrieb wieder aufgenommen wird.

Eine wichtige Anforderung an Bremseinrichtungen, die für voranstehend genannte Einsatzzwecke bestimmt sind, besteht darin, dass der Bremsvorgang selbsttätig auch dann erfolgen muss, wenn ein gezieltes Betätigen der Bremse bei Ausfall der Energiesorgung nicht möglich ist. Aus diesem Grunde sind Bremseinrichtungen der in Rede stehenden Art üblicherweise mit einer selbsttätig arbeitenden Rückstelleinrichtung ausgerüstet, die mit dem Lüften der Bremse vorgespannt und elektrohydraulisch oder elektromagnetisch bis zum Bremsbefehl oder bis zum Ausfall der Energiesorgung gehalten werden.

Bremseinrichtungen, die diese als "Fail-Safe-Verhalten" bezeichnete Anforderung erfüllen, sind in verschiedenen Ausführungen bekannt. Herkömmlicherweise sind derartige Bremseinrichtungen mit einer hydraulischen oder pneumatischen Vorrichtung zum Öffnen (Lüften) und Aufhalten der Bremszange versehen. So ist beispielsweise aus der DE 198 37 315 C1 eine Federspeicherbremse mit einer mit Druckluft zu beaufschlagenden Lüfteinrichtung und aus der DE 10 2006 008 340 B4 eine Bremseinrichtung mit einer mit Druckluft oder Hydraulikflüssigkeit zu beaufschlagenden Lüfteinrichtung bekannt.

Die aus der DE 198 37 315 C1 bekannte Federspeicherbremse sowie die aus der DE 10 2006 008 340 B4 bekannte Bremseinrichtung haben sich in der Praxis grundsätzlich bewährt. Allerdings erfordern die hydraulischen bzw. pneumatischen Lüfteinrichtungen dieser Bremsen eine relativ teure und aufwändige hydraulische oder pneumatische Netzversorgung sowie relativ teuere hydraulische oder pneumatische Steuer- und Schaltkomponenten. Unbefriedigend an hydraulischen bzw. pneumatischen Lüfteinrichtungen ist auch der relativ hohe Wartungsaufwand, insbesondere der Aufwand für die Medienaufbereitung, Medienfilterung und die Kondensatabscheidung.

Ferner ist aus der DE 10 2010 023 701 A1 ein Lüftgerät für eine Bremseinrichtung bekannt, die eine auf einen zwischen einer Brems- und einer Lüftstellung verstellbaren Bremskopf wirkende Stelleinrichtung aufweist, die beim Verstellen des Bremskopfes in die Lüftstellung eine auf den Bremskopf wirkende Anstellkraft überwindet. Die Stelleinrichtung und der Bremskopf sind über eine lösbare Magnetkupplung miteinander koppelbar, wobei der Bremskopf bei gelöster Magnetkupplung unter Wirkung der Anstellkraft seine Bremsstellung einnimmt. Die Stelleinrichtung ist als Linearantriebseinheit mit einem Schrittmotor und einem zwischen einer Koppel- und einer Spannstellung verstellbaren Linearspindel ausgebildet. Die Ausführung der Linearantriebseinheit als Stelleinrichtung unter Verwendung einer Gewindespindel (Linearspindel) ist bezüglich der Sicherstellung des Fail-Safe-Verhaltens jedoch prinzipiell problematisch, da eine Gewindespindel zur Selbsthemmung neigt. Ferner erfordert dieses bekannte Lüftgerät insbesondere zur Realisierung der Spannstellung und der Anstellkraft relativ viele Bauteile. Zudem erfordert dieses Lüftgerät aufwendige Maßnahmen, um Probleme mit der Beschleunigung von trägen Massen zu beherrschen. Darüber hinaus führt dieses Lüftgerät im Ergebnis zu einer sperrigen, länglichen Bremsenkonstruktion.

Die DE 10 2008 009 946 A1 offenbart eine Parkbremse für Nutzfahrzeuge mit einem Federspeicher, der einen von einer Feder beaufschlagten verschiebbaren Kolben aufweist, und einem elektrischen Antrieb, der so angeordnet ist, dass er den Kolben gegen die Kraft der Feder verschiebt. Der Antrieb ist dabei beispielsweise ein Elektromotor, der über ein Ritzel eine Zahnstange antreibt.

Die Verwendung von Freilaufkupplungen in Bremslüftern ist aus dem Stand der Technik bekannt (siehe z.B. FR 2 956 888 A1 und DE 19 21 252 A1).

Der vorliegenden Erfindung liegt die Aufgabe zugrunde, eine Vorrichtung der eingangs genannten Art zu schaffen, die ein sicheres "Fail-Safe-Verhalten" aufweist, keine teure und aufwändige hydraulische oder pneumatische Netzversorgung erfordert und sich durch eine wartungsarme Konstruktion auszeichnet.

Zur Lösung dieser Aufgabe wird eine Vorrichtung mit den Merkmalen des Anspruchs 1 vorgeschlagen.

Die erfindungsgemäße Vorrichtung umfasst ein aus einer Bremsstellung in eine Lüftstellung und umgekehrt bewegbares Stellelement, eine an dem Stellelement angreifende Spannvorrichtung, die beim Bewegen des Stellelements aus der Bremsstellung in die Lüftstellung gespannt wird, und einen Elektromotor zum Bewegen des Stellelements aus der Bremsstellung in die Lüftstellung, wobei der Elektromotor über eine Kupplung mit dem Stellelement gekoppelt ist. Das Stellelement ist dabei mit einer Zahnstange versehen, die mit einem durch den Elektromotor angetriebenen Antriebsritzel kämmt, wobei der Elektromotor sein Drehmoment über die Kupplung auf das Antriebsritzel überträgt. Die erfindungsgemäße Vorrichtung ist weiter dadurch gekennzeichnet, dass die Kupplung als Freilaufkupplung ausgeführt ist, wobei das Stellelement als Kolbenstange eines Druckflüssigkeit enthaltenden Hilfszylinders ausgeführt ist, in welchem miteinander über die Zahnstange verbundene Kolben angeordnet sind, deren einander abgewandte Kolbenflächen Zylinderkammern begrenzen, wobei die Zylinderkammern miteinander durch eine die Zahnstange überbrückende Umlaufleitung hydraulisch verbunden sind, wobei die Umlaufleitung mit einem elektrisch steuerbaren Ventil zum Absperren oder Öffnen der Umlaufleitung versehen ist, und wobei dem Stellelement ein Schalter zugeordnet ist, der, wenn das Stellelement bei einer Bewegung aus der Bremsstellung die Lüftstellung erreicht, ein Abschalten des Elektromotors und ein Absperren der Umlaufleitung bewirkt.

Die erfindungsgemäße Vorrichtung erfordert keine hydraulische oder pneumatische Netzversorgung. Aufgrund des beim bestimmungsgemäßen Einsatz bei elektromotorischen Antrieben immer vorhandenen Drehstromnetzes ist die erfindungsgemäße Vorrichtung praktisch universal einsetzbar. Sie muss lediglich an dem vorhandenen Drehstromnetz angeschlossen werden und stellt somit eine sogenannte "Plug-And-Play"-Lösung dar. Insbesondere ermöglicht die erfindungsgemäße Vorrichtung gegenüber herkömmlichen Lüfteinrichtungen eine erhebliche Reduzierung der bewegten Massen bzw. eine Minimierung von strömenden Flüssigkeitsmengen, wodurch ein besonders sicheres "Fail-Safe-Verhalten" erreicht werden kann. Die erfindungsgemäße Vorrichtung erfordert keine teuren hydraulischen oder pneumatischen Steuer- und Schaltkomponenten. Sie stellt vielmehr eine wartungsarme bis wartungsfreie mechanische Konstruktion dar.

Die erfindungsgemäße Vorrichtung stellt bei sehr geringem Energieverbrauch in zuverlässiger Weise ein Offenhalten der zugeordneten Bremse in deren Lüftstellung sicher. Des Weiteren wird durch die Verdrängung der Druckflüssigkeit aus der einen Zylinderkammer in die andere Zylinderkammer eine gedämpfte, aber dennoch ausreichend schnelle Schließfunktion der Bremse erzielt.

Hinsichtlich einer kompakten Bauweise der erfindungsgemäßen Vorrichtung ist es vorteilhaft, wenn nach einer bevorzugten Ausgestaltung die Spannvorrichtung in einer der Zylinderkammern angeordnet ist.

Eine weitere bevorzugte Ausgestaltung der erfindungsgemäßen Vorrichtung ist dadurch gekennzeichnet, dass die Freilaufkupplung als Spreiz-Klemmkupplung ausgeführt ist. Eine derartige Freilaufkupplung funktioniert rein mechanisch. Sie erfordert für ihre Funktion weder eine elektrische noch eine andere Energieversorgung. Vorteilhaft ist auch, dass sich eine Spreiz-Klemmkupplung sehr kompakt realisieren lässt, so dass sie nur wenig Bauraum beansprucht.

Nach einer alternativen, ebenfalls vorteilhaften Ausgestaltung der erfindungsgemäßen Vorrichtung ist deren Freilaufkupplung als elektromagnetische Freilaufkupplung ausgeführt. Eine solche elektromagnetische Kupplung hat den Vorteil, dass bei anliegender elektrischer Spannung die Kraftübertragung erfolgt und bei Wegfall der elektrischen Spannung der Kraftschluss sehr zuverlässig aufgehoben wird bzw. ist. Die elektromagnetische Freilaufkupplung der erfindungsgemäßen Vorrichtung kann beispielsweise als elektromagnetische Spreizkupplung oder als elektromagnetische Konuskupplung (Konusmagnetkupplung) ausgeführt sein.

Eine weitere bevorzugte Ausgestaltung der erfindungsgemäßen Vorrichtung ist dadurch gekennzeichnet, dass der Elektromotor sein Drehmoment über mindestens eine Zahnradgetriebestufe auf die Kupplung überträgt. Hierdurch lassen sich ein günstiges Übersetzungsverhältnis des Drehmoments erzielen und damit der Energieverbrauch des Elektromotors reduzieren.

Eine weitere bevorzugte Ausgestaltung der erfindungsgemäßen Vorrichtung sieht vor, dass die Spannvorrichtung aus mehreren Federn gebildet ist, vorzugsweise ein aus einer Vielzahl von Tellerfedern gebildetes Federpaket aufweist. Durch die Kombination von mehreren Federn, vorzugsweise Tellerfedern, lässt sich eine optimale Bremsfunktion mit relativ kleinem Feder- bzw. Stellweg und damit eine besonders kompakte Bauweise der erfindungsgemäßen Vorrichtung erzielen.

Anstelle eines Federpakets kann die Spannvorrichtung auch mindestens einen Luftspeicher bzw. eine Luftfeder als Federelement aufweisen.

Ferner ist es vorteilhaft, wenn die Spannvorrichtung nach einer weiteren bevorzugten Ausgestaltung der erfindungsgemäßen Vorrichtung mit einer Vorspanneinrichtung versehen ist. Hierdurch bietet die erfindungsgemäße Vorrichtung die Möglichkeit, die Bremskraft bedarfsgerecht einstellen zu können.

Nach einer weiteren bevorzugten Ausgestaltung der erfindungsgemäßen Vorrichtung ist die Kolbenstange mit einem (weiteren) Kolben versehen, der eine (weitere) Zylinderkammer begrenzt, die benachbart zu der oder den Federn angeordnet und mit einem Füll- und/oder Druckmessanschluss versehen ist. Diese Ausgestaltung ermöglicht über die Befüllung der weiteren Zylinderkammer mit einem Druckfluid in vorteilhafter Weise ein Vorspannen der Federn bzw. des Federpakets und damit eine Einstellung der Bremskraft. Außerdem lässt sich über diesen Druckmessanschluss eine automatische Bremsbelag-Verschleißkompensation in die erfindungsgemäße Vorrichtung integrieren. Zur Realisierung einer solchen Bremsbelagverschleiß-Kompensationseinrichtung enthält die weitere Zylinderkammer ein druckbeaufschlagtes Fluidpolster, das mit einem Druckspeicher verbunden ist, in welchem Fluid druckbeaufschlagt gespeichert ist.

Eine weitere vorteilhafte Ausgestaltung der erfindungsgemäßen Vorrichtung ist dadurch gekennzeichnet, dass die weitere Zylinderkammer an ihrem der Zahnstange abgewandten Ende durch einen Schraubeinsatz verschlossen ist, wobei die wirksame Spannkraft der Spannvorrichtung durch Drehen des Schraubeinsatzes einstellbar ist. Mittels des Schraubeinsatzes kann auf einfache Weise eine Voreinstellung der Spannkraft der Spannvorrichtung vorgenommen werden.

Nach einer weiteren Ausgestaltung der erfindungsgemäßen Vorrichtung ist der Schraubeinsatz mit einer manuell betätigbaren Spindel versehen, mittels der das Stellelement bei unterbrochener Stromversorgung des Elektromotors in die Lüftstellung bewegbar ist.

Zur Sicherstellung einer zuverlässigen Funktion der Spannvorrichtung ist es vorteilhaft, wenn nach einer weiteren Ausgestaltung der erfindungsgemäßen Vorrichtung in dem oben erwähnten Hilfszylinder, in welchem miteinander über die Zahnstange verbundene Kolben angeordnet sind, deren einander abgewandte Kolbenflächen Zylinderkammern begrenzen, die miteinander durch eine die Zahnstange überbrückende Umlaufleitung hydraulisch verbunden sind, ein axial verschiebbares Abstandsrohr angeordnet ist, in welchem mehrere der Federn, vorzugsweise Tellerfedern, aufgenommen sind. Durch das Abstandsrohr können eine Verkantung sowie ein übermäßiges oder gar schädliches Zusammendrücken der Tellerfedern insbesondere beim Lüften der Bremseinrichtung zuverlässig verhindert werden.

Eine weitere bevorzugte Ausgestaltung der erfindungsgemäßen Vorrichtung ist dadurch gekennzeichnet, dass das Stellelement mit einem Wegmesssystem versehen ist. Durch das Wegmesssystem kann mithilfe einer daran angeschlossenen Auswerteelektronik der Zustand der zugeordneten Bremse einschließlich des Bremsbelagverschleißes erfasst und überwacht werden.

Nachfolgend wird die Erfindung anhand einer mehrere Ausführungsbeispiele darstellenden Zeichnung näher erläutert. Es zeigen:
- Fig. 1: eine Längsschnittansicht einer erfindungsgemäßen Vorrichtung;
- Fig. 2: eine weitere Längsschnittansicht der Vorrichtung der Fig. 1;
- Figuren 3 und 4: eine in der Vorrichtung der Fig. 1 verwendete Kupplung, in Seiten-bzw. Vorderansicht;
- Fig. 5: eine Schnittansicht der Kupplung entlang der Schnittlinie V-V in Fig. 4;
- Fig. 6: die Kupplung in einer perspektivischen Darstellung;
- Figuren 7 und 8: vergrößerte Schnittansichten der Kupplung gemäß Fig. 5, wobei Fig. 7 eine Nullstellung (Freilaufstellung) und Fig. 8 eine Klemmstellung der Kupplung zeigt;
- Fig. 9: eine weitere erfindungsgemäße Vorrichtung mit einer Bremszange in einem Längsschnitt;
- Fig. 10: die Vorrichtung der Fig. 9 in einer Seitenansicht, wobei der Bereich einer Zahnradgetriebstufe und der Freilaufkupplung geschnitten dargestellt sind;
- Fig. 11: einen vergrößerten Abschnitt der Vorrichtung der Fig. 9 in einer Seitenansicht;
- Fig. 12: die Vorrichtung der Fig. 9 in einem weiteren Längsschnitt, dessen Schnittebene senkrecht zur Schnittebene der Fig. 9 liegt; und
- Fig. 13: die Vorrichtung gemäß Fig. 9 in entsprechender Längsschnittansicht mit einer manuell betätigbaren Lüfteinrichtung zum Öffnen der Bremszange bei unterbrochener Stromversorgung.

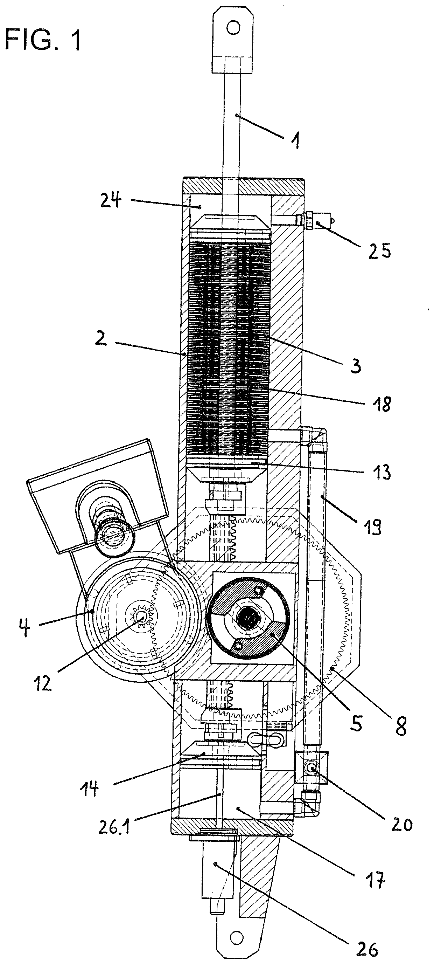

Die in den Figuren 1 bis 8 dargestellte Vorrichtung dient zum Lüften und automatischen Betätigen einer (nicht gezeigten) Bremseinrichtung, beispielsweise einer Bremszange einer Scheibenbremse. Die erfindungsgemäße Vorrichtung stellt sicher, dass der Bremsvorgang selbsttätig auch dann erfolgt, wenn ein gezieltes Betätigen der Bremseinrichtung bei Ausfall der Energiesorgung, insbesondere der Stromversorgung, nicht möglich ist.

Die Vorrichtung umfasst ein aus einer Bremsstellung in eine Lüftstellung und umgekehrt bewegbares Stellelement 1. Das Stellelement 1 ist als Kolbenstange eines Druckflüssigkeit enthaltenden Hilfszylinders 2 ausgeführt.

An dem Stellelement 1 greift eine Spannvorrichtung an, die beim Bewegen des Stellelements 1 aus der Bremsstellung in die Lüftstellung gespannt wird. Die Spannvorrichtung weist ein aus einer Vielzahl von Tellerfedern gebildetes Federpaket 3 auf.

Ferner umfasst die Vorrichtung einen Elektromotor 4 zum Bewegen des Stellelements bzw. der Kolbenstange 1 aus der Bremsstellung in die Lüftstellung. Bei dem Elektromotor 4 handelt es sich typischerweise um einen Asynchronmotor. Der Elektromotor 4 ist über eine mechanische Freilaufkupplung 5, vorzugsweise eine Spreiz-Klemmkupplung mit dem Stellelement 1 gekoppelt.

Das Stellelement bzw. die Kolbenstange 1 ist mit einer Zahnstange 6 versehen, die mit einem durch den Elektromotor 4 angetriebenen Antriebsritzel 7 kämmt. Die Zahnstange 6 schließt sich axial an die Kolbenstange 1 an. Der Elektromotor 4 überträgt sein Drehmoment über eine Zahnradgetriebestufe 8 und die mechanische Freilaufkupplung 5 auf das Antriebsritzel 7. Das Antriebsritzel 7 ist drehstarr mit einer Welle 9 verbunden, die in einem am Zylindergehäuse 10 befestigten Lagerblock 11 drehbar gelagert ist. Die Welle 9 und die Motorwelle 12 verlaufen im Wesentlichen parallel zueinander.

In dem Hilfszylinder 2 sind Kolben 13, 14 angeordnet, die über die Zahnstange 6 miteinander verbunden sind. Die einander zugewandten Seiten der Kolben 13, 14 sind mit Halterungen 15, 16 versehen, über die die Enden der Zahnstange 6 mit den Kolben 13, 14 form- und/oder stoffschlüssig verbunden sind.

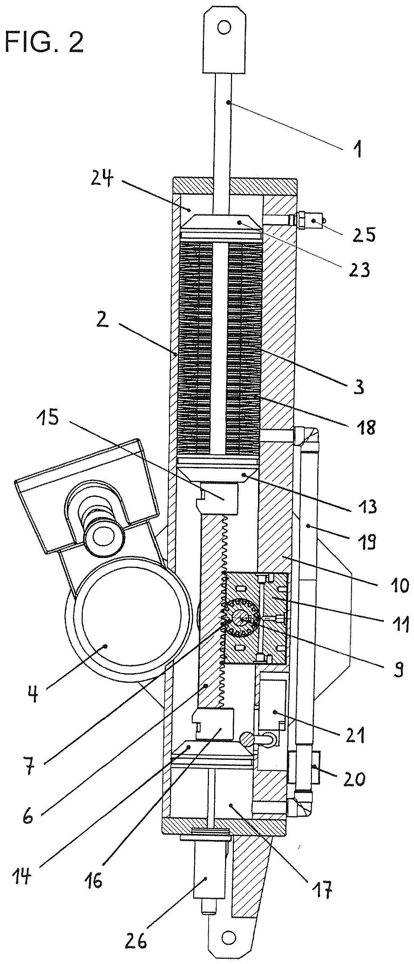

Die einander abgewandten Kolbenflächen begrenzen Zylinderkammern 17, 18, die durch eine die Zahnstange 6 überbrückende Umlaufleitung 19 miteinander hydraulisch verbunden sind. Die Umlaufleitung ist mit einem elektrisch steuerbaren Ventil 20 zum Absperren bzw. Öffnen der Umlaufleitung 19 versehen. Dem Stellelement 1 ist ein Sensor 21 zugeordnet, der erfasst, wenn das Stellelement bzw. der Kolben eine bestimmte Position erreicht hat. Dieser Sensor 21 kann beispielsweise - wie in den Figuren 1 und 2 dargestellt - als Endlagenschalter ausgeführt sein. Der Sensor bzw. Endlagenschalter 21 bewirkt ein Abschalten des Elektromotors 4 und ein Absperren der Umlaufleitung 19, wenn das Stellelement 1 bei einer Bewegung aus der Bremsstellung eine bestimmte Lüftstellung erreicht hat.

Nach Erreichen des vorgegebenen oder vorgebbaren Kolbenhubes wird also der Elektromotor 4 über den Endschalter abgeschaltet und das Ventil 20 eingeschaltet und somit die Umlaufleitung 19 abgesperrt. Damit ist die gegen die Federkraft gespannte koaxiale Anordnung der Zahnstange 6 mit den daran befestigten Kolben 13, 14 in ihrer Stellung fixiert. Eingebaut in eine Industriebremse oder als Kompaktsystem mit kombinierter Bremszange können auf diese Weise verschiedenste Bremsentypen mit geringster Energie offen gehalten werden.

Ein Bremsvorgang wird eingeleitet durch Abschalten und Öffnen des Ventils 20. Die Federkraft drückt dann die Hilfsflüssigkeit durch die Umlaufleitung 19 zurück in die durch den Kolben 13 begrenzte Zylinderkammer 18. Gleichzeitig bewegt sich die Kolbenanordnung 13, 14 mit der Zahnstange 6 abgekoppelt von der Getriebestufe 8 und dem Elektromotor 4 durch die Spreiz-Klemmkupplung zügig in ihre Ausgangsstellung. Der Endschalter bzw. Sensor 21 steht nun wieder in der Schaltstellung "Motoranschluss zu" und "Ventilanschluss auf". Die erfindungsgemäße Vorrichtung ist damit bereit für den nächsten Lüfthub.

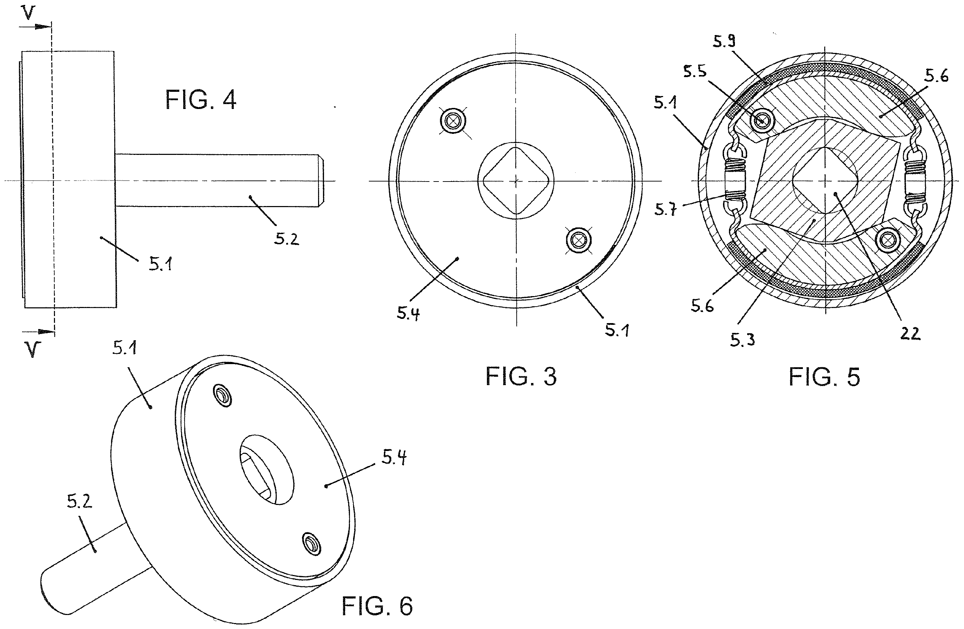

Die Spreiz-Klemmkupplung 5 der erfindungsgemäßen Vorrichtung ist in den Figuren 3 bis 8 detaillierter dargestellt. Die Spreiz-Klemmkupplung 5 weist ein trommelartiges Kupplungsteil 5.1, das über die Welle 5.2 drehstarr mit dem mit der Zahnstange 6 kämmenden Antriebsritzel 7 verbunden ist. In dem trommelartigen Kupplungsteil 5.1 ist ein drehbarer Spreizkörper 5.3 angeordnet, der drehstarr bzw. formschlüssig mit dem Zahnrad 8 der Getriebestufe verbunden ist. Beispielsweise weist die das Zahnrad 8 tragende Welle ein als Vierkant ausgebildetes Wellenende 22 auf, das formschlüssig in eine entsprechende Ausnehmung des Spreizkörpers 5.3 gesteckt ist.

Des Weiteren weist die Spreiz-Klemmkupplung 5 eine deckelartige Lagerplatte 5.4 auf, an der parallel zu den Wellen 9, 22 verlaufende Gelenkstifte oder Gelenkbolzen 5.5 gehalten sind. Auf den Gelenkbolzen 5.5 ist jeweils ein Gelenkstück (Klemmbacke) 5.6 aufgesteckt. Die Gelenkstücke 5.6 haben jeweils eine im Wesentlichen bogenförmige Form. Sie sind mittels Federn 5.7 gegen den Spreizkörper 5.3 gespannt.

Der Spreizkörper 5.3 weist schräg zueinander verlaufende, einen stumpfen Winkel einschließende Außenflächen 5.31, 5.32 auf, die den Gelenkstücken (Klemmbacken) 5.6 zugewandt sind. Durch Drehen der mit dem Zahnrad 8 verbundenen Welle bzw. des Vierkants 22 werden die Gelenkstücke 5.6 radial nach außen gespreizt. In dem dargestellten Ausführungsbeispiel verläuft die Drehrichtung D für das Spreizen entgegen dem Uhrzeigersinn.

Auf den Außenseiten der Gelenkstücke 5.6 sind bogenförmige Reibbelagträger 5.8 angeordnet, die ihrerseits außenseitig mit einem kreisbogenförmigen Reibbelag 5.9 versehen sind. Der jeweilige Reibbelagträger 5.8 weist gegenüber dem Reibbelag 5.9 vorstehende Enden 5.81 auf, die nach innen umgebogen sind und Löcher (Durchbrechungen) zum Einhängen von Zugfedern 5.7 aufweisen.

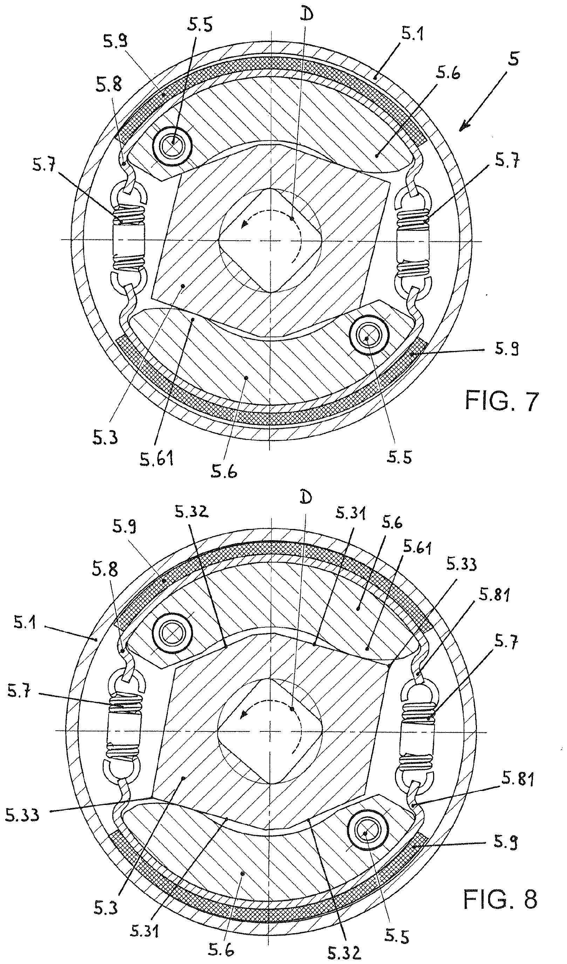

In den Figuren 5 und 7 ist die Nullstellung (Freilaufstellung) der Spreiz-Klemmkupplung 5 dargestellt, während Fig. 8 die Klemmstellung der Spreiz-Klemmkupplung 5 zeigt. Es ist zu erkennen, dass das jeweilige Gelenkstück 5.6 an seinem dem Gelenk 5.5 abgewandten Ende einen relativ dicken Bereich 5.61 aufweist, der am Spreizkörper 5.3 anliegt und beim Drehen desselben auf dessen abgeschrägter Außenfläche 5.31 in Richtung der Spreizkörperkante 5.33 gleitet und dabei zusammen mit dem Reibbelagträger 5.8 und dem Reibbelag 5.9 gegen die kreiszylindrische Innenfläche des Kupplungsteils 5.1 gepresst wird.

Die Kolbenstange 1 (Stellelement) der erfindungsgemäßen Vorrichtung ist vorzugsweise mit einem weiteren Kolben 23 versehen, der eine Zylinderkammer 24 begrenzt, die benachbart zu dem Federpaket 3 angeordnet ist. An dieser Zylinderkammer 24 ist ein Druckmessanschluss 25 angeordnet. Durch Befüllen der durch den Kolben 23 begrenzten Zylinderkammer 24 mit einem Druckfluid kann das Federpaket 3 vorgespannt und damit die Bremskraft eingestellt werden. Das Befüllen der Zylinderkammer 24 kann über den Druckmessanschluss 25 oder einen (nicht gezeigten) separaten Füllanschluss erfolgen.

Des Weiteren ist das Stellelement 1 vorzugsweise mit einem Wegmesssystem 26 versehen. Beispielsweise kann das Wegmesssystem 26 an dem dem Druckmessanschluss 25 gegenüberliegenden Ende des Zylindergehäuses 10 angeordnet sein. Das Wegmesssystem 26 weist dabei eine Messstange 26.1 auf, die mit dem an der Zahnstange 6 befestigten Kolben 14 verbunden ist.

Durch das Wegmesssystem 26 und eine Druckmessung über den Anschluss 25 kann mithilfe einer Auswertelektronik der Zustand der Bremse einschließlich des Bremsbelagverschleißes angezeigt und überwacht werden. Insbesondere liegt es Rahmen der vorliegenden Erfindung, an dem Druckmess- bzw. Füllanschluss 25 eine automatische Bremsbelag-Verschleißkompensation zu integrieren. Hierdurch kann die Bremskraft über den Bremsbelagverschleiß automatisch konstant gehalten werden.

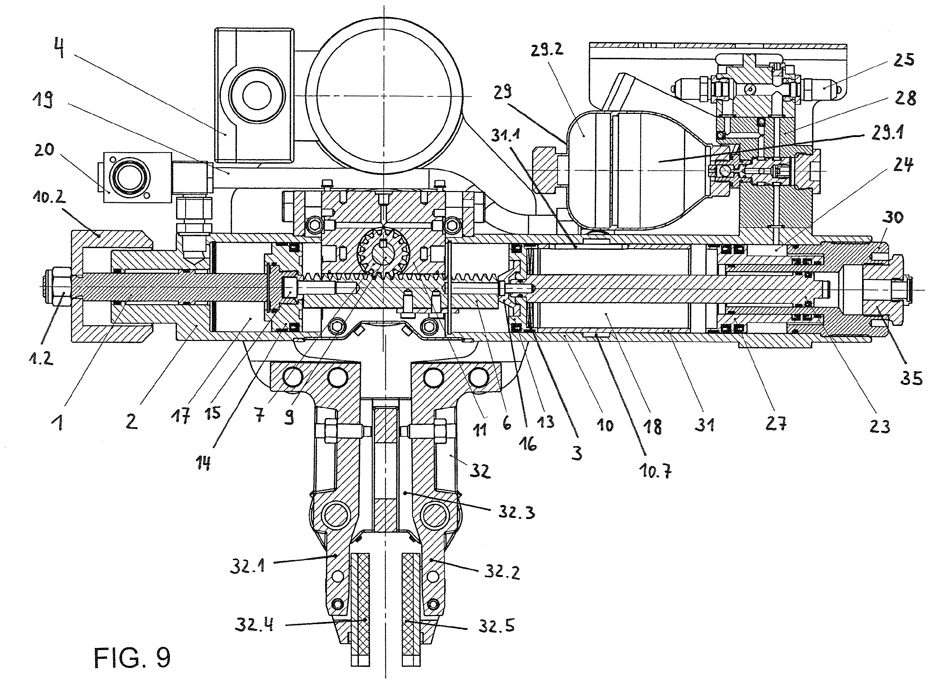

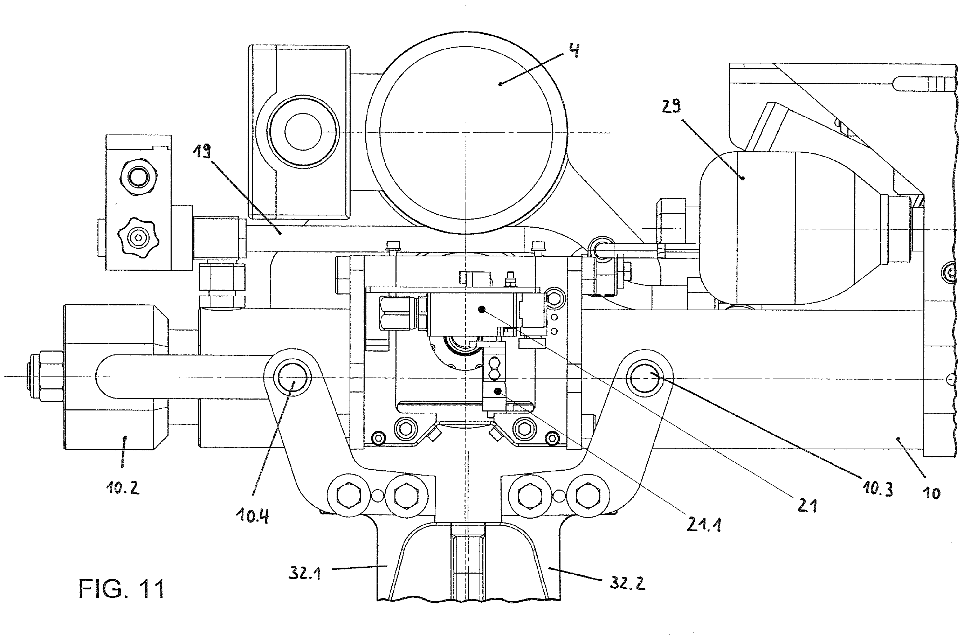

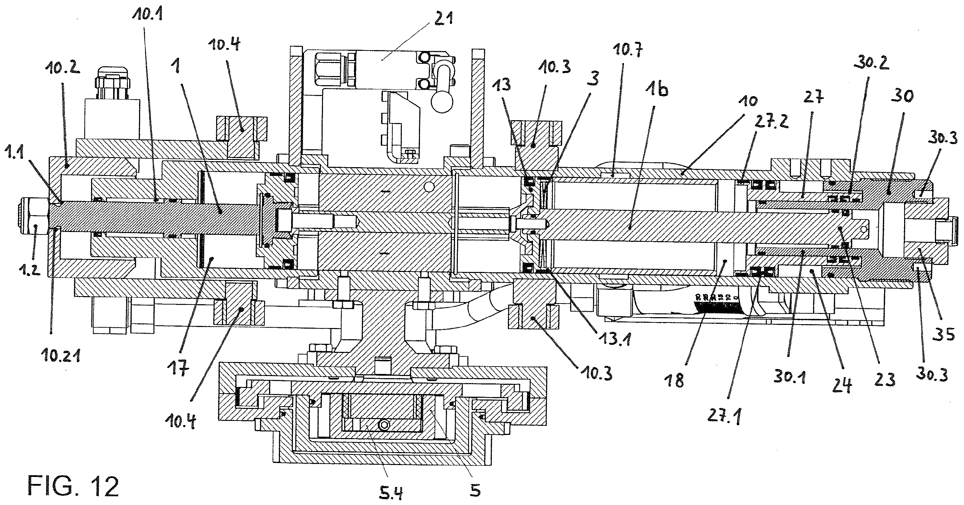

In den Figuren 9 bis 12 ist ein weiteres Ausführungsbeispiel einer erfindungsgemäßen Vorrichtung dargestellt, wobei die Vorrichtung hier mit einer Bremszange 32 kombiniert ist. Die Vorrichtung umfasst wiederum ein aus einer Bremsstellung in eine Lüftstellung und umgekehrt bewegbares Stellelement 1. Das Stellelement 1 ist als Kolbenstange eines Druckflüssigkeit enthaltenden Zylinders 2 ausgeführt. An dem Stellelement 1 greift eine Spannvorrichtung an, die beim Bewegen des Stellelements 1 aus der Bremsstellung in die Lüftstellung gespannt wird. Die Spannvorrichtung weist ein Federpaket 3 auf, das aus einer Vielzahl von Tellerfedern gebildet ist.

Des Weiteren umfasst die Vorrichtung einen Elektromotor 4, mittels dem die Kolbenstange 1 aus der Bremsstellung in die Lüftstellung bewegbar ist. Hierzu ist die Kolbenstange 1 mit einer Zahnstange 6 versehen. Die Zahnstange 6 schließt sich axial an die Kolbenstange 1 an. Der Elektromotor 4 überträgt sein Drehmoment über eine Zahnradgetriebestufe 8 und eine mechanische Freilaufkupplung 5, die vorzugsweise als Spreiz-Klemmkupplung ausgeführt ist, auf ein mit der Zahnstange 6 kämmendes Antriebsritzel 7. Das Antriebsritzel 7 ist drehstarr mit einer Welle 9 verbunden, die in einem am Zylindergehäuse 10 befestigten Lagerblock 11 drehbar gelagert ist. Die Welle 9 und die Motorwelle 12 verlaufen im Wesentlichen parallel zueinander.

In dem Zylinder 2 sind Kolben 13, 14 angeordnet, die über die Zahnstange 6 miteinander verbunden sind. Die Kolben 13, 14 sind mit Halterungen 15, 16 versehen, über die die Enden der Zahnstange 6 mit den Kolben 13, 14 form- und/oder kraftschlüssig verbunden sind.

Die einander abgewandten Kolbenflächen begrenzen Zylinderkammern 17, 18, die durch eine die Zahnstange 6 überbrückende Umlaufleitung (Fluidleitung) 19 miteinander hydraulisch verbunden sind. Die Umlaufleitung ist mit einem elektrisch steuerbaren Ventil 20 zum Absperren bzw. Öffnen der Umlaufleitung 19 versehen. Dem Stellelement 1 bzw. der Zahnstange 6 ist ein Sensor 21 zugeordnet, der erfasst, wenn das Stellelement bzw. die Zahnstange eine bestimmte Position erreicht hat. Dieser Sensor 21 kann beispielsweise als Endlagenschalter ausgeführt sein, wobei an der Zahnstange 6 eine sogenannte Schaltfahne 21.1 oder ein entsprechendes Betätigungselement angebracht ist, die/das den Endlagenschalter in einer bestimmten Position der Zahnstange kontaktiert bzw. betätigt. Der Sensor oder Endlagenschalter 21 bewirkt ein Abschalten des Elektromotors 4 und ein Absperren der Umlaufleitung 19, wenn das Stellelement 1 bei einer Bewegung aus der Bremsstellung eine bestimmte Lüftstellung erreicht hat.

Nach Erreichen des vorgegebenen oder vorgebbaren Kolbenhubes wird also der Elektromotor 4 abgeschaltet und die Umlaufleitung 19 durch das Ventil 20 abgesperrt. Damit ist die gegen die Federkraft gespannte koaxiale Anordnung der Zahnstange 6 mit den daran befestigten Kolben 13, 14 in ihrer Stellung fixiert.

Ein Bremsvorgang wird eingeleitet durch Abschalten und Öffnen des Ventils 20. Die Federkraft drückt dann in der Zylinderkammer 17 befindliche Flüssigkeit durch die Umlaufleitung 19 zurück in die durch den Kolben 13 begrenzte Zylinderkammer 18. Gleichzeitig wird die Kolbenanordnung 13, 14 mit der Zahnstange 6 durch die Freilaufkupplung 5 abgekoppelt von der Getriebestufe 8 und dem Elektromotor 4 zügig in ihre Ausgangsstellung bewegt.

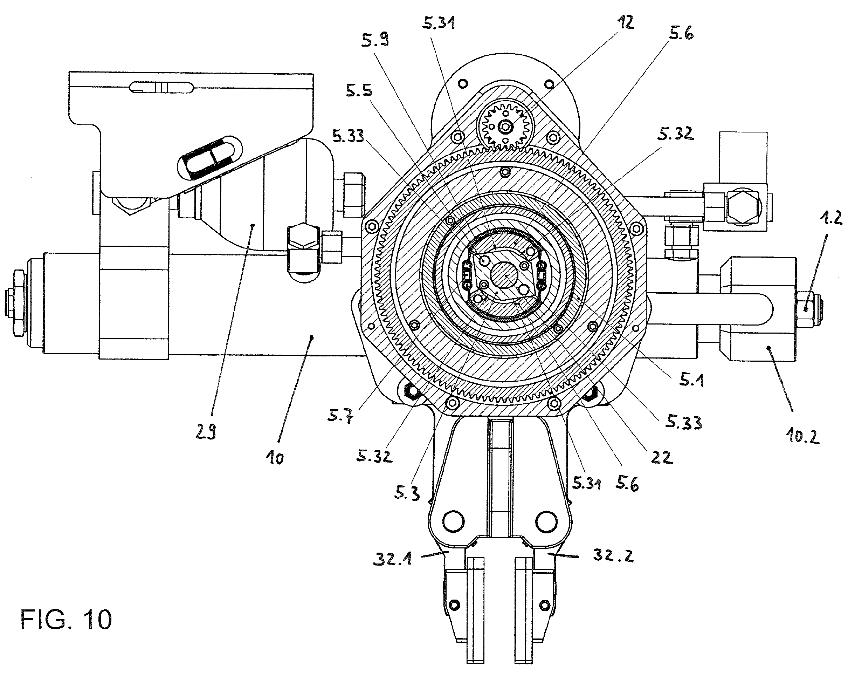

Die Ausführung der in Fig. 10 zu erkennenden rein mechanischen Freilaufkupplung 5 entspricht vom Prinzip her der Ausführung der in den Figuren 5, 7 und 8 dargestellten Spreiz-Klemmkupplung, so dass insoweit zur Vermeidung von Wiederholungen auf die Beschreibung der Figuren 5, 7 und 8 verwiesen wird. Das Wellenende 22 ist in Fig. 10 allerdings nicht als Vierkant, sondern im Wesentlichen kreiszylindrrisch ausgebildet. Das Wellenende 22 ist jedoch dennoch drehstarr mit dem Spreizkörper 5.3 verbunden.

An die Außenseite des Zylindergehäuses 10 sind gegenüberliegende Gelenkzapfen 10.3 angebracht, welche die Schwenkachse für einen ersten Bremszangenarm 32.1 bilden. Ferner ist an einem Ende des Zylindergehäuses 10 ein zweites Gehäuseteil oder Halteteil 10.2 vorgesehen, das relativ zu dem Zylindergehäuse 10 bewegbar und beispielsweise kappenförmig ausgebildet ist. Das Halte- oder zweite Gehäuseteil 10.2 ist mit der Kolbenstange 1 verbunden, so dass es bei einer axialen Verschiebung der Kolbenstange 1 entsprechend mitbewegt wird. Das Zylindergehäuse 10 weist hierzu eine Durchgangsbohrung 10.1 auf, durch welche die Kolbenstange 1 nach außen bzw. in Richtung des zweiten Gehäuseteils 10.2 geführt ist. Zur flüssigkeitsdichten Abdichtung der Zylinderkammer 17 sind die Durchgangsbohrung 10.1 sowie die Kolbenstange 1 mit Ringdichtungen versehen. Das Halte- oder zweite Gehäuseteil 10.2 ist ebenfalls mit einer Bohrung oder Durchbrechung 10.21 versehen, während die Kolbenstange 1 einen Absatz 1.1 und an seinem Ende ein Außengewinde aufweist, wobei das Halte- oder Gehäuseteil 10.2 mittels einer Mutter 1.2 an dem Absatz der Kolbenstange 1 axial festgelegt ist. An dem Halte- oder zweite Gehäuseteil 10.2 sind zueinander parallel verlaufende Verlängerungen oder Schenkel befestigt, an deren Außenseite ebenfalls gegenüberliegende Gelenkzapfen 10.4 angebracht sind, an denen ein zweiter Bremszangenarm 32.2 schwenkbar gelagert ist. Über ein Gelenkglied 32.3 sind die Bremszangenarme 32.1, 32.2 zudem gelenkig derart miteinander verbunden, dass ein Ineinanderschieben von Zylindergehäuse 10 und zweitem Gehäuseteil (Halteteil) 10.2 ein Auseinanderschwenken der von den Bremszangenarmen 32.1, 32.2 getragenen Bremsbeläge 32.4, 32.5 bewirkt, während durch das Auseinanderschieben von Zylindergehäuse 10 und zweitem Gehäuseteil 10.2 die Bremszangenarme 32.1, 32.2 in Bremsstellung gebracht werden.

Das Zylindergehäuse 10 weist an seinem dem zweiten Gehäuseteil 10.2 gegenüberliegenden Ende eine Montageöffnung mit einem Innengewinde auf. Die Montageöffnung ist durch einen Schraubeinsatz 30 verschlossen. Der Schraubeinsatz 30 weist einen hülsenförmigen Abschnitt 30.1 auf, in den eine mit dem Kolben 13 verbundene (zweite) Kolbenstange 1b mit einer Durchmessererweiterung oder einem Kolben 23 axial verschiebbar sowie abgedichtet hineinragt. Der Kolben 23 ist hierzu an seinem Umfang mit Ringnuten versehen, in denen Ringdichtungen gehalten sind. Auf dem hülsenförmigen Abschnitt 30.1 des Schraubeinsatzes 30 ist ein buchsenförmiger Körper 27 aufgesteckt, der einen umlaufenden Vorsprung oder Bund 27.1 aufweist, dessen Außendurchmesser geringfügig kleiner als der Innendurchmesser der Zylinderkammer 18 ist. Der buchsenförmige Körper 27 ist Teil einer Bremsbelagverschleiß-Kompensationseinrichtung und relativ zum Zylindergehäuse 10 sowie relativ zu dem Schraubeinsatz 30 koaxial verschiebbar. Er kann auch als Kompensationskolben bezeichnet werden. Der Schraubeinsatz 30 weist eine Ringnut 30.2 auf, in die der buchsenförmige Körper (Kompensationskolben) 27 mit Spiel eingesteckt ist. Der umlaufende Vorsprung 27.1 und der in die Ringnut eingesteckte Abschnitt des buchsenförmigen Körpers 27 sind mit in Ringnuten gehaltenen Ringdichtungen versehen. Das Zylindergehäuse 10, der buchsenförmige Körper 27 und der Schraubeinsatz 30 begrenzen eine ringförmige (weitere) Zylinderkammer 24, die der Aufnahme eines Fluidpolsters dient. Die Zylinderkammer 24 ist über eine im Zylindergehäuse 10 vorgesehene Anschlussöffnung 10.6 und einen Ventil- und Leitungsblock 28 mit einem Druckspeicher 29 verbunden. In dem Druckspeicher 29 ist druckbeaufschlagt ein inkompressibles Fluid, beispielsweise ein Öl, gespeichert. Zur Druckbeaufschlagung des Fluids bzw. Öls ist der Druckspeicher 29 durch eine fluidundurchlässigen Membran in zwei Kammern 29.1, 29.2 unterteilt, wobei die dem Ventil- und Leitungsblock 28 abgewandte Kammer 29.2 mit einem Gas, vorzugsweise Stickstoff befüllt ist.

Durch ein im Ventil- und Leitungsblock 28 in die zum Druckspeicher 29 führenden Leitung geschaltetes Rückschlagventil wird verhindert, dass Fluid vom Fluidpolster zum Druckspeicher 29 strömt.

Das in der Zylinderkammer 18 angeordnete Federpaket 3, das aus einer Vielzahl ringförmiger Tellerfedern gebildet ist, ist mit einem axialen Teilabschnitt in einem Abstandsrohr 31 aufgenommen, das axial verschiebbar in der Zylinderkammer 18 angeordnet ist. Das Tellerfederpaket 3 ist einerseits an dem mit der Zahnstange 6 verbundenen Kolben 13 und andererseits an dem buchsenförmigen Körper (Kompensationskolben) 27 abgestützt. Der Kolben 13 sowie der buchsenförmige Körper 27 weisen dabei einander zugewandte Kragen 13.1, 27.2 auf, welche die Enden des Tellerfederpakets 3 am Umfang umgreifen. Das Abstandsrohr 31 weist in seiner Rohrwand eine sich parallel zur Kolbenstange 1b erstreckende Öffnung (Langloch) 31.1 auf, die in Überdeckung mit einer am Innenumfang der Zylinderkammer 18 ausgebildeten Ringnut 10.7 liegt. An dieser Ringnut 10.7 ist die Umlaufleitung 19 angeschlossen. Das Abstandsrohr 31 ist wesentlich kürzer als das Tellerfederpaket 3. Das Abstandsrohr 31 dient als Sicherung gegen Verkanten bzw. Blockfahren der Tellerfedern 3.

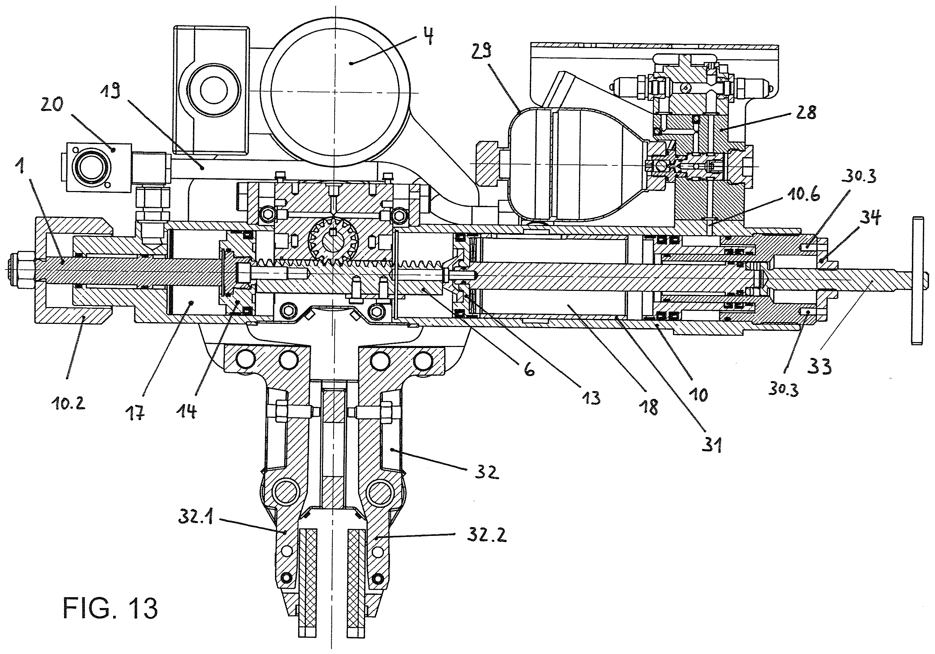

Durch Eindrehen bzw. teilweises Herausdrehen des Schraubeinsatzes 30 lässt sich die Federspannung des Federtellerpakets 3 voreinstellen. Des Weiteren ist der Schraubeinsatz 30 mit einem entfernbaren Verschluss, vorzugsweise Schraubverschluss 35, versehen, der nach Entfernung die Anbringung einer manuell betätigbaren Spindel 33 mit Formschlusselementen, beispielsweise Bajonettklauen, zum Öffnen der Bremszange 32 bei einer Unterbrechung der Stromversorgung gestattet. Hierzu weist der Schraubeinsatz 30 an seiner außenliegenden Stirnseite Gewindebohrungen 30.3 auf, an denen ein die Spindel 33 tragender, eine Gewindebohrung aufweisender Deckel 34 mittels Schrauben montierbar ist (vgl. Fig. 13). Die durch die Spindel 33 gebildete Handlüfteinrichtung kann optional zur Ersteinstellung der erfindungsgemäßen Vorrichtung und gegebenenfalls im Notbetrieb verwendet werden.

Die radiale Anordnung des Ventil- und Leitungsblocks 28 an der Außenseite des Zylindergehäuses 10 ermöglicht es, den Druckspeicher 29 parallel zu dem Zylindergehäuse 10, zwischen dem Ventil- und Leitungsblock 28 und dem Elektromotor 4 anzuordnen. Hierdurch lässt sich die erfindungsgemäße Vorrichtung vorteilhaft in kompakter Bauform realisieren.

Die Ausführung der Erfindung ist nicht auf das in der Zeichnung dargestellten Ausführungsbeispiele beschränkt. Vielmehr sind weitere Varianten denkbar, die auch bei von den gezeigten Ausführungsbeispielen abweichender Gestaltung von der in den Ansprüchen angegebenen Erfindung Gebrauch machen. So kann beispielsweise anstelle eines Federpakets 3 grundsätzlich auch alternativ eine Luftfeder verwendet werden. Ferner kann anstelle einer rein mechanischen Spreiz-Klemmkupplung auch eine elektromagnetische Kupplung, insbesondere eine elektromagnetische Spreizkupplung oder Konusmagnetkupplung, als Freilaufkupplung in der erfindungsgemäßen Vorrichtung zum Einsatz kommen.

Des Weiteren kann der Endlagenschalter 21 durch einen Druckschalter ersetzt werden, der hergerichtet ist, den beim Spannen der Spannvorrichung bzw. des Tellerfederpakets mit der Zahnstange 6 bzw. der Schaltfahne ausgeübten Druck zu erfassen. Schließlich kann anstelle des Endlagenschalters 21 auch ein elektrischer oder elektronischer Wegaufnehmer in der erfindungsgemäßen Vorrichtung zum Einsatz kommen.

## Patentansprüche

1. Vorrichtung zum Lüften und automatischen Betätigen einer Bremseinrichtung, mit einem aus einer Bremsstellung in eine Lüftstellung und umgekehrt bewegbaren Stellelement (1), einer an dem Stellelement (1) angreifenden Spannvorrichtung (3), die beim Bewegen des Stellelements (1) aus der Bremsstellung in die Lüftstellung gespannt wird, und einem Elektromotor (4) zum Bewegen des Stellelements (1) aus der Bremsstellung in die Lüftstellung, wobei der Elektromotor über eine Kupplung (5) mit dem Stellelement (1) gekoppelt ist, wobei das Stellelement mit einer Zahnstange (6) versehen ist, die mit einem durch den Elektromotor (4) angetriebenen Antriebsritzel (7) kämmt, wobei der Elektromotor (4) sein Drehmoment über die Kupplung (5) auf das Antriebsritzel (7) überträgt, **dadurch gekennzeichnet, dass** die Kupplung (5) als Freilaufkupplung ausgeführt ist, wobei das Stellelement (1) als Kolbenstange eines Druckflüssigkeit enthaltenden Hilfszylinders (2) ausgeführt ist, in welchem miteinander über die Zahnstange (6) verbundene Kolben (13, 14) angeordnet sind, deren einander abgewandte Kolbenflächen Zylinderkammern (17, 18) begrenzen, wobei die Zylinderkammern (17, 18) miteinander durch eine die Zahnstange (6) überbrückende Umlaufleitung (19) hydraulisch verbunden sind, wobei die Umlaufleitung (19) mit einem elektrisch steuerbaren Ventil (20) zum Absperren oder Öffnen der Umlaufleitung versehen ist, und wobei dem Stellelement (1) ein Schalter (21) zugeordnet ist, der, wenn das Stellelement (1) bei einer Bewegung aus der Bremsstellung die Lüftstellung erreicht, ein Abschalten des Elektromotors (4) und ein Absperren der Umlaufleitung (19) bewirkt.

2. Vorrichtung nach Anspruch 1, **dadurch gekennzeichnet, dass** die Freilaufkupplung (5) als Spreiz-Klemmkupplung oder als elektromagnetische Freilaufkupplung ausgeführt ist.

3. Vorrichtung nach Anspruch 1 oder 2, **dadurch gekennzeichnet, dass** der Elektromotor (4) sein Drehmoment über mindestens eine Zahnradgetriebestufe (8) auf die Kupplung (5) überträgt.

4. Vorrichtung nach einem der Ansprüche 1 bis 3, **dadurch gekennzeichnet, dass** die Spannvorrichtung (3) in einer (18) der Zylinderkammern angeordnet ist.

5. Vorrichtung nach einem der Ansprüche 1 bis 4, **dadurch gekennzeichnet, dass** die Spannvorrichtung (3) eine oder mehrere Federn, vorzugsweise Tellerfedern aufweist.

6. Vorrichtung nach einem der Ansprüche 1 bis 5, **dadurch gekennzeichnet, dass** die Spannvorrichtung mindestens eine Luftfeder als Federelement aufweist.

7. Vorrichtung nach einem der Ansprüche 1 bis 6, **dadurch gekennzeichnet, dass** die Spannvorrichtung (3) mit einer Vorspanneinrichtung versehen ist.

8. Vorrichtung nach Anspruch 5 oder 6 oder nach Anspruch 7 in Verbindung mit Anspruch 5 oder 6, **dadurch gekennzeichnet, dass** die Kolbenstange (1) mit einem Kolben (23) versehen ist, der eine Zylinderkammer (24) begrenzt, die benachbart zu der oder den Federn (3) angeordnet und mit einem Füll- und/oder Druckmessanschluss (25) versehen ist.

9. Vorrichtung nach einem der Ansprüche 1 bis 8, **dadurch gekennzeichnet, dass** das Stellelement (1) mit einem Wegmesssystem (26) versehen ist.

10. Vorrichtung nach Anspruch 8 oder 9, **dadurch gekennzeichnet, dass** die Zylinderkammer (24) ein druckbeaufschlagtes Fluidpolster enthält, das mit einem Druckspeicher (29) verbunden ist, in welchem Fluid druckbeaufschlagt gespeichert ist.

11. Vorrichtung nach Anspruch 8 oder 10, **dadurch gekennzeichnet, dass** die Zylinderkammer (24) an ihrem der Zahnstange (6) abgewandten Ende durch einen Schraubeinsatz (30) verschlossen ist, wobei die wirksame Spannkraft der Spannvorrichtung (3) durch Drehen des Schraubeinsatzes (30) einstellbar ist.

12. Vorrichtung nach Anspruch 11, **dadurch gekennzeichnet, dass** der Schraubeinsatz (30) mit einer manuell betätigbaren Spindel (33) versehen ist, mittels der das Stellelement (1) bei unterbrochener Stromversorgung des Elektromotors (4) in die Lüftstellung bewegbar ist.

13. Vorrichtung nach Anspruch 5 oder nach Anspruch 5 und einem der Ansprüche 2, 3, 4, 6 bis 12, **dadurch gekennzeichnet, dass** in dem Hilfszylinder (2) ein axial verschiebbares Abstandsrohr (31) angeordnet ist, in welchem mehrere der Federn, vorzugsweise Tellerfedern, aufgenommen sind.

## Claims

1. Device for releasing and automatically actuating a braking mechanism, comprising a control element (1) that can be moved out of a brake position into a release position and vice versa, a tensioning device (3) that acts on the control element (1) and is tensioned when the control element (1) is moved out of the brake position into the release position, and an electric motor (4) for moving the control element (1) out of the brake position into the release position, the electric motor being coupled to the control element (1) by means of a coupling (5), the control element being provided with a rack (6) that meshes with a driving pinion (7) that is driven by the electric motor (4), the electric motor (4) transmitting its torque to the driving pinion (7) via the coupling (5), **characterised in that** the coupling (5) is designed as an overrunning clutch, the control element (1) being designed as a piston rod of an auxiliary cylinder (2) containing hydraulic fluid, in which cylinder pistons (13, 14) are arranged that are interconnected by the rack (6) and the piston surfaces of which pistons that are remote from one another define cylinder chambers (17, 18), the cylinder chambers (17, 18) being hydraulically interconnected by a bypass line (19) that spans the rack (6), the bypass line (19) being provided with an electrically controllable valve (20) for shutting off or opening the bypass line, and a switch (21) being assigned to the control element (1), which switch causes the electric motor (4) to turn off and the bypass line (19) to be shut off when the control element (1) reaches the release position when moving out of the brake position.

2. Device according to claim 1, **characterised in that** the overrunning clutch (5) is designed as an expanding compression coupling or as an electromagnetic overrunning clutch.

3. Device according to either claim 1 or claim 2, **characterised in that** the electric motor (4) transmits its torque to the coupling (5) via at least one gearwheel gear stage (8).

4. Device according to any of claims 1 to 3, **characterised in that** the tensioning device (3) is arranged in one (18) of the cylinder chambers.

5. Device according to any of claims 1 to 4, **characterised in that** the tensioning device (3) comprises one or more springs, preferably disc springs.

6. Device according to any of claims 1 to 5, **characterised in that** the tensioning device comprises at least one pneumatic spring as the spring element.

7. Device according to any of claims 1 to 6, **characterised in that** the tensioning device (3) is provided with a pretensioning mechanism.

8. Device according to either claim 5 or claim 6, or according to claim 7 in conjunction with either claim 5 or claim 6, **characterised in that** the piston rod (1) is provided with a piston (23) that defines a cylinder chamber (24), which chamber is arranged adjacently to the spring(s) (3) and is provided with a filling connector and/or a pressure measurement connector (25).

9. Device according to any of claims 1 to 8, **characterised in that** the control element (1) is provided with a position-measuring system (26).

10. Device according to either claim 8 or claim 9, **characterised in that** the cylinder chamber (24) contains a pressurised fluid cushioning that is connected to a pressure accumulator (29) in which fluid is stored under pressure.

11. Device according to either claim 8 or claim 10, **characterised in that** the end of the cylinder chamber (24) remote from the rack (6) is sealed by a screw plug (30), the effective tensioning force of the tensioning device (3) being adjustable by rotating the screw plug (30).

12. Device according to claim 11, **characterised in that** the screw plug (30) is provided with a manually actuatable spindle (33), by means of which the control element (1) can be moved into the release position if the power supply to the electric motor (4) is interrupted.

13. Device according to claim 5, or according to claim 5 and any of claims 2, 3, 4 or 6 to 12, **characterised in that** an axially movable spacer tube (31) is arranged in the auxiliary cylinder (2), in which tube a plurality of the springs, preferably disc springs, is received.

## Revendications

1. Dispositif de desserrement et d'actionnement automatique d'un système de freinage, comprenant un élément de réglage (1), qui peut être amené d'une position de freinage dans une position de desserrement et inversement, un dispositif de contrainte (3), qui, attaquant l'élément de réglage (1), peut être amené lors du déplacement de l'élément de réglage (1) de la position de freinage à la position de desserrement, et un moteur électrique (4) pour le déplacement de l'élément de réglage (1) de la position de freinage à la position de desserrement, sachant que le moteur électrique est couplé avec l'élément de réglage (1) par l'intermédiaire d'un accouplement (5), sachant que l'élément de réglage est pourvu d'une crémaillère (6) qui s'engrène avec un pignon d'entraînement (7) commandé par le moteur électrique (4), sachant que le moteur électrique (4) transmet son couple de rotation au pignon d'entraînement (7) par l'intermédiaire de l'accouplement (5), **caractérisé en ce que** l'accouplement (5) est réalisé en tant qu'accouplement à roue libre, sachant que l'élément de réglage (1) est réalisé en tant que tige de piston d'un cylindre auxiliaire (2) contenant un liquide, dans lequel sont disposés des pistons (13, 14) reliés ensemble par l'intermédiaire de la tige de piston (6), les face de piston opposées les unes aux autres limitent des chambres de cylindres (17, 18), sachant que les chambres de cylindres (17, 18) sont reliées ensemble hydrauliquement par une dérivation (19) qui forme un pontage sur la tige de piston (6), sachant que la dérivation (19) est pourvue d'une soupape (20) à commande électrique, qui est destinée à fermer ou à ouvrir la dérivation et sachant qu'un commutateur (21), associé à l'élément de réglage (1), déclenche un arrêt du moteur électrique (4) et une fermeture de la dérivation (19) quand l'élément de réglage (1), quittant la position de freinage, atteint la position de desserrement.

2. Dispositif selon la revendication 1,
**caractérisé en ce que** l'accouplement à roue libre (5) est réalisé sous la forme d'accouplement d'extension et de serrage ou d'accouplement à roue libre électromagnétique.

3. Dispositif selon revendication 1 ou 2,
**caractérisé en ce que** le moteur électrique (4) transmet son couple de rotation à l'accouplement (5) par l'intermédiaire d'au moins un étage de transmission de l'engrenage (8).

4. Dispositif selon l'une des revendications 1 à 3,
**caractérisé en ce que** le dispositif de contrainte (3) est disposé dans l'une (18) des chambres de cylindres.

5. Dispositif selon l'une des revendications 1 à 4,
**caractérisé en ce que** le dispositif de contrainte (3) est pourvu d'un ou de plusieurs ressort/s, de préférence de coupelles ressorts.

6. Dispositif selon l'une des revendications 1 à 5,
**caractérisé en ce que** le dispositif de contrainte est pourvu d'au moins un ressort pneumatique en tant qu'élément élastique.

7. Dispositif selon l'une des revendications 1 à 6,
**caractérisé en ce que** le dispositif de contrainte (3) est pourvu d'un système de précontrainte.

8. Dispositif selon la revendication 5 ou 6 ou selon la revendication 7 en relation avec la revendication 5 ou 6, **caractérisé en ce que** la tige de piston (1) est pourvue d'un piston (23) limitant une chambre de cylindre (24), qui avoisine le ou les ressort/s (3) et qui est pourvue d'un raccord de mesure de remplissage et/ou de pression (25) .

9. Dispositif selon l'une des revendications 1 à 8,
**caractérisé en ce que** l'élément de réglage (1) est pourvu d'un système de mesure de course (26).

10. Dispositif selon revendication 8 ou 9,
**caractérisé en ce que** la chambre de cylindre (24) contient un coussin de fluide soumis à la pression, qui est relié à un réservoir de pression (29), dans lequel du fluide est stocké sous pression.

11. Dispositif selon revendication 8 ou 10,
**caractérisé en ce que** la chambre de cylindre (24) est fermée à son extrémité opposée à la crémaillère (6), par un insert à vis (30), sachant que la force de contrainte exercée par le dispositif de contrainte (3) peut être réglée par déplacement rotatif de l'insert à vis (30).

12. Dispositif selon la revendication 11,
**caractérisé en ce que** l'insert de vis (30) est pourvu d'une broche (33) pouvant être actionnée manuellement, au moyen de laquelle l'élément de réglage (1) peut être amené dans la position de desserrement en cas d'interruption de l'alimentation en courant du moteur électrique (4).

13. Dispositif selon la revendication 5 ou la
revendication 5 et l'une des revendications 2, 3, 6 à 12, **caractérisé en ce que**, dans le cylindre auxiliaire (2), est disposé un tube écarteur (31) déplaçable axialement, dans lequel plusieurs des ressorts, de préférence des coupelles ressorts, sont logés.
